# EUROPEAN PATENT SPECIFICATION

(11) **EP 1 072 159 B1**
(45) Date of publication and mention of the grant of the patent: **25.10.2006**
(21) Application number: 99908991.5
(22) Date of filing: 18.03.1999
(51) Int. Cl.: H04Q 7/22, H04M 3/42

(54) **SYSTEM AND PROCEDURE FOR IMPLEMENTING AN ANSWERING SERVICE**
SYSTEM UND VERFAHREN ZUR IMPLEMENTIERUNG EINES BEANTWORTUNGSDIENSTES
SYSTEME ET PROCEDE DE MISE EN OEUVRE D'UN SERVICE DES ABONNEES ABSENTS

(30) Priority: 30.03.1998 FI 980718
(43) Date of publication of application: 31.01.2001
(73) Proprietor: TeliaSonera Finland Oyj, 00510 Helsinki (FI)
(72) Inventor: TAKALA, Anu, FIN-00800 Helsinki (FI)
(74) Representative: Simmelvuo, Markku Kalevi
(86) International application number: PCT/FI1999/000213
(87) International publication number: WO 1999/053699

(56) References cited:
- EP-A1- 0 611 239
- EP-A2- 0 783 219
- WO-A1-97/20423
- WO-A2-97/47120
- US-A- 5 276 731
- US-A- 5 434 908

## Description

The present invention relates to a system as defined in the preamble of claim 1 and to a procedure as defined in the preamble of claim 7 for implementing a short message or electronic mail response on the basis of a subscriber's calendar information.

At present, when a subscriber cannot be reached by telephone or electronic mail, calls or mail to the subscriber are received by a secretary, who may be hired for the job. In the following, the caller or the sender of electronic mail is called A-subscriber and the addressee of the call or electronic mail is called B-subscriber.

When a A-subscriber is trying to reach a B-subscriber, a secretary tells where the B-subscriber is and asks the A-subscriber to call again and receives any messages for his/her employer. In addition, in the telephone network it is possible to use a telephone answer-back device for leaving and receiving a short message. Furthermore, chargeable secretary services are available.

It is also possible in the telephone network to send electronic mail messages based on the TCP/IP protocol. In addition, in certain mobile communication systems the subscriber can send and receive short messages in text form.

Employing human labour to take care of receiving calls and electronic mail is expensive. A secretary is also limited by his/her personal resources and liable to human errors. Moreover, a secretary is only available during working hours. Furthermore, transmission of speech in a telecommunication network requires an unreasonable deal of network capacity. The telecommunication network is also burdened by useless communication attempts.

A further problem in the use of secretarial services and telephone answering devices is that the callers cannot be sorted out but each caller is given the same predetermined information. It is likewise impossible to define an automatic, sender-specific response to electronic mail messages.

In earlier methods, communication with foreign parties is also restricted by language problems. The caller or sender does not necessarily speak the same language with the secretary/answering device.

WO 9747120 discloses a method and system for recording information to a personal database program. The system comprises a wireless terminal, a communication network and the database program. In the document the problem arises as how to enter information into a subscriber profile and how to keep a subscriber profile up to date to reflect a subscriber's changing schedule (page 3, lines 18-19). WO 9747120 does not disclose a device for sending to a caller a personalised answering message based on the database if the called subscriber cannot be reached.

EP 0783219 discloses a wireless communication device for sending a short message to a caller if the called subscriber cannot be reached at the moment of the call. The short message typically contains information at what time the called subscriber is present. The called subscriber has previously stored a recorded message into the device. In the document the problem arises when using a telephone, there is often a situation that the receiving party can't answer the incoming call (page 1, lines 8-9). However EP 0783219 does not contain an answering device for generating automatically from a calendar database of the called subscriber an answering message that can be sent to the caller. Also in EP 0783219 it is the communication device itself which answers to the call and when it is turned off the call is not answered.

The object of the present invention is to eliminate the drawbacks described above or at least to significantly reduce them.

A specific object of the present invention is to disclose a new type of procedure and system for a short message or electronic mail answering service formed on the basis of calendar information relating to a called subscriber. A further object of the invention is to provide a possibility to generate an answer from information that the called subscriber has specified for each calling subscriber.

As for the features characteristic of the invention, reference is made to the claims.

The system of the present invention for implementing an answering service in a telecommunication network comprises a short-message service centre (SMSC) for receiving, storing and sending a short message, an electronic mail service base for receiving, storing and sending an electronic mail message, a mobile services switching centre (MSC) and data terminal equipment (DTE). According to the invention, an answering server is provided, comprising means, which can be implemented in any way known to the skilled person, preferably via software, for generating and transmitting an automatic short message or electronic mail answer from a called subscriber's calendar database to a calling subscriber if the calling subscriber cannot reach the called subscriber by telephone or via electronic mail.

In an embodiment of the system, the calendar database contains calendar information relating to the called subscriber, stored in different fields, sorted according to content. Thus, different fields could contain items of information e.g. as follows: called subscriber's name, point of time, called subscriber's whereabouts, person acting as substitute, and free space for other messages. If necessary, it is also possible to store in the calendar database a field in which a reminder message to be sent to the called subscriber is defined concerning an event specified as being of essential importance.

In an embodiment of the system, the calendar database comprises means for updating the fields in the calendar database from an electronic calendar used by the called subscriber. These means can be implemented in any manner known to the skilled person, such as using electronics or preferably software.

In an embodiment of the system, the answering server comprises means for identifying the calling subscriber on the basis of the telephone number or electronic mail address. Further, the answering server comprises means for generating a response from calendar database fields set by the called subscriber for the calling subscriber identifier in question. Both of the above-mentioned means can be implemented in any manner known to the skilled person, such as using electronics or preferably software. Furthermore, a connection is provided from the answering server to a user database for identification of the called subscriber and obtaining the correct information for a response. Further, the answering server comprises means for connecting the call to a telephone answer-back service. These means can be implemented in any manner known to the skilled person, such as using electronics or preferably software. The call is transferred to a telephone answer-back device only if the called subscriber has activated this service for the calling subscriber identifier in question.

In an embodiment of the system, the system comprises means for maintaining and changing the information in the called subscriber's electronic calendar from the subscriber's own terminal equipment, from the Internet or from a separate information system. These means can be implemented in many ways known to the skilled person, preferably via software.

In the procedure of the present invention for implementing an answering service in a telecommunication network comprising a short-message service centre (SMSC) for receiving, storing and sending a short message, an electronic mail service base for receiving, storing and sending an electronic mail message, a mobile services switching centre (MSC) and data terminal equipment (DTE), if a called subscriber cannot be reached, an answering server automatically answers calls and/or electronic mail messages addressed to the called subscriber by a calling subscriber, in accordance with fields stored for the called subscriber in the calendar database.

In an embodiment of the procedure, items of calendar information regarding the called subscriber are stored in different fields in the calendar database, sorted according to the content of the information.

In an embodiment of the procedure, the calendar database is updated from an electronic calendar used by the called subscriber.

In an embodiment of the procedure, the answering server identifies the calling subscriber by the telephone number and/or electronic mail address. Furthermore, the answering server generates an answer to the calling subscriber from calendar database fields set by the called subscriber for the calling subscriber identifier in question. Further, the answering server identifies the called subscriber from a user database in order to find the right calendar database.

In an embodiment of the procedure, the answering server activates a telephone answering service if someone attempts to reach the called subscriber by telephone and this function has been set to an active state for the calling subscriber identifier in question.

In an embodiment of the procedure, the called subscriber may use his/her electronic calendar from his/her own terminal equipment, from the Internet or from a separate information system.

As compared with prior art, the present invention has the advantage that it provides a cheap, reliable and fast method for implementing an accessibility service for all parties. For the called subscriber, the method is cheaper than a secretary. Moreover, the service is active day and night. Furthermore, the called subscriber can combine all his/her calendar services in one service. Information stored in the calendar database is preserved even if the electronic calendar used by the called subscriber should be destroyed or lost. Further, the calendar database can be regarded as a backup for the electronic calendar. Thus, for instance, if the electronic calendar should be destroyed, the calendar data can be retrieved from the calendar database and fed into a functional electronic calendar. In addition, the invention makes it possible to combine an interpreting service with the answering service, thus allowing calls or correspondence received from abroad to be answered in the calling subscriber's own language.

The invention allows a considerable saving in network capacity to be achieved because messages are transmitted in the form of compact data packets instead of circuit-switched speech requiring plenty of capacity. Useless communication attempts by the calling subscriber are also avoided. This saves both network capacity and the calling subscriber's time.

A further advantage as compared with prior art is ease of use.

In the following, the invention will be described in detail by the aid of a few examples of its embodiments with reference to the attached drawing, which presents an embodiment of the system of the invention.

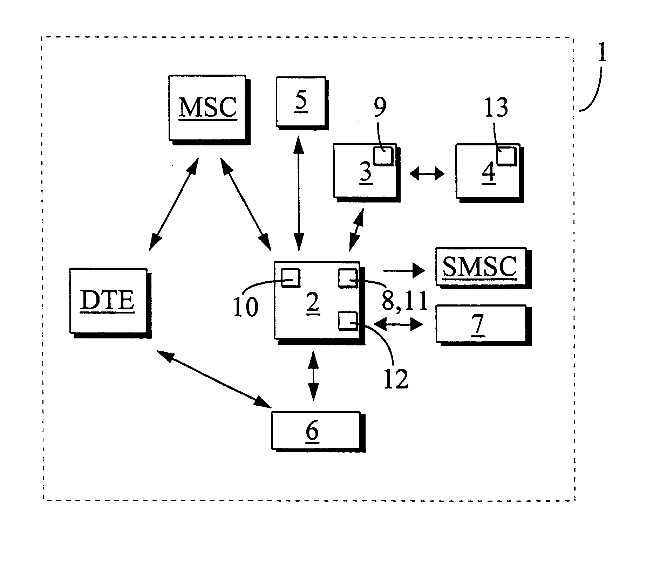

The system illustrated in Fig. 1 comprises a telecommunication network 1 comprising a mobile services switching centre MSC, a short-message service centre SMSC for the reception, delivery and storage of short messages, and an electronic mail service base 6 for the reception, delivery and storage of electronic mail messages. Furthermore, the system comprises an answering server 2, which comprises means 8 and 11 for generating and transmitting from the B-subscriber's calendar database 3 an automatic response to a short message or electronic mail message, said response being individualised for the A-subscriber identifier. The calendar database 3 comprises means 9 for the updating of information from the B-subscriber's electronic calendar 4, which comprises means 13 for maintaining information relating to the B-subscriber from his/her data terminal equipment DTE, from the Internet or from some other, separate information system. In this example, means 9 and 13 are preferably implemented using software. Moreover, the answering server 2 comprises means 10 for identifying the A-subscriber on the basis of the telephone number and/or electronic mail address and means 12 for connecting the call to a telephone answering server 7. In the case of the present example, means 8, 10, 11 and 12 are preferably implemented with software. To identify the B-subscriber, a user database 5 is used. The system further comprises data terminal equipment DTE, which may consist of a telephone and/or a computer terminal connected to a TCP/IP network (Transmission Control Protocol/Internet Protocol, TCP/IP). Moreover, the system comprises an answering server 7 for implementing a telephone answer-back service.

In an embodiment as illustrated in Fig. 1, the B-subscriber maintains his/her calendar database 3 e.g. by filling his/her electronic calendar 4 with desired information from his/her data terminal equipment DTE, which preferably consists of a mobile station or a computer. The electronic calendar 4 may be implemented e.g. in the Internet, in a mobile station or in a separate database.

In an embodiment as illustrated in Fig. 1, the A-subscriber's data terminal equipment consists of a mobile station. The A-subscriber calls the B-subscriber's number via his/her mobile station and the call is transferred to the answering server 2 in a manner defined by the B-subscriber.

The B-subscriber may store a setting in the answering server 2 to indicate whether calls from certain numbers are to be connected to another number or to the subscriber's own terminal equipment or whether each call is to be answered with a short message. The answering server 2 identifies the B-subscriber from the user database 5 and then uses the information stored in the B-subscriber's calendar database 3 to generate a short message response to the A-subscriber. The information in the calendar database 3 has been sorted into different fields, each containing different information about the B-subscriber regarding his/her schedule, appointments, substitutes, etc. The B-subscriber can enter definitions in the answering server 2 specifying which A-subscriber identifiers are to answered with information from which fields in the calendar database 3. If necessary, it is also possible to define in the calendar database 3 a field in which a reminder message about an event considered essential can be defined, to be sent to the B-subscriber.

In the case of the example, the A-subscriber identifier is the telephone number 1234 of the A-subscriber's mobile station. For this identifier, the B-subscriber has defined e.g. a short message like this: "I am in London. In urgent business matters, contact me at number 2345", to be sent to the A-subscriber. For an A-subscriber calling from another number, the message generated and sent by the answering server 2 could be e.g. "I am at a conference. Contact me again tomorrow.". The B-subscriber can also simultaneously use a telephone answering device, in which case an A-subscriber for whose identifier this function has been activated is first connected to an answer-back server 7, whereupon he/she receives the information from the answering server 2 in accordance with the above example.

In the case of the example, for A-subscriber identifiers for which no special message has been specified, a message can be generated e.g. only from the first field in the calendar database 3.

In the case of the example, the A-subscriber could just as well have used a computer as data terminal equipment DTE, in which case he/she would have sent an electronic mail message over the Internet and a received a response like those in the above example by electronic mail. In such cases, the A and B subscribers are identified on the basis of the electronic mail address.

In the case of the example, there is a possibility that the electronic calendar 4 used by the B-subscriber is e.g. destroyed. In this case, the B-subscriber can copy his/her data from the calendar database 3 back to a new or restored electronic calendar 4.

The invention is not restricted to the examples of its embodiments described above, but many variations are possible within the scope of the inventive idea defined in the claims.

## Claims

1. System for implementing an answering service in a telecommunication network (1) comprising a short-message service centre (SMSC) for receiving, storing and sending a short message, an electronic mail service base (6) for receiving, storing and sending an electronic mail message, a mobile services switching centre (MSC) and data terminal equipment (DTE), **characterised in that** the system comprises an answering server (2) which comprises means (8) for generating a response from those fields in the calendar database (3) which a called subscriber has set for a calling subscriber identifier in question and transmitting an automatic short message or electronic mail response from the called subscriber's calendar database (3) to the calling subscriber if the calling subscriber cannot reach the called subscriber via a phone call or an electronic mail message; and the calendar database (3) comprises means (9) for updating said fields in the calendar database (3) from an electronic calendar (4) used by the called subscriber.

2. System as defined in claim 1 **characterised in that** the calendar database (3) contains calendar information relating to the called subscriber, stored in different fields and sorted by content.

3. System as defined in claim 1 or 2, **characterized in that** the answering server (2) comprises means (10) for identifying the calling subscriber on the basis of the telephone number and/or electronic mail address.

4. System as defined in any one of claims 1 - 3, **characterized in that** a connection is provided from the answering server (2) to a user database (5) for identification of the called subscriber and to allow correct response information to be found.

5. System as defined in any one of claims 1 - 4, **characterised in that** the answering server (2) comprises means (12) for connecting the call to a telephone answer-back service if the called subscriber has activated this service for the calling subscriber identifier in question.

6. System as defined in any one of claims 1 - 5, **characterised in that** the system comprises means (13) for maintaining and changing the information in the called subscriber's electronic calendar (4) from the subscriber's own data terminal equipment (DTE), via the Internet or via a separate information system.

7. Procedure for implementing an answering service in a telecommunication network (1) comprising a short-message service centre (SMSC) for receiving, storing and sending a short message, an electronic mail service base (6) for receiving, storing and sending an electronic mail message, a mobile services switching centre (MSC) and data terminal equipment (DTE), **characterised in that** an answering server (2) automatically generates a response for a calling subscriber from those fields in the calendar database (3) that a called subscriber has set for the calling subscriber identifier in question and transmitting an automatic short message or electronic mail response from the called subscriber's calendar database (3) to the calling subscriber (3) if the called subscriber cannot be reached via a phone call or an electronic mail message; and the calendar database (3) is updated from the called subscriber's electronic calendar (4).

8. Procedure as defined in claim 7, **characterised in that** calendar information relating to the called subscriber is stored in different fields in the calendar database (3), sorted by content.

9. Procedure as defined in claim 7 or 8, **characterised in that** the answering server (2) identifies the calling subscriber by the telephone number and/or electronic mail address.

10. Procedure as defined in any one of claims 7 - 9, **characterised in that** the answering server (2) identifies the called subscriber from a user database (5) in order to find the correct calendar database (3).

11. Procedure as defined in any one of claims 7 - 10, **characterised in that** the answering server (2) activates a telephone answer-back service if someone attempts to reach the called subscriber by telephone and this function has been set to an active state for the calling subscriber identifier in question.

12. Procedure as defined in any one of claims 7 - 11, **characterised in that** the called subscriber can use his/her electronic calendar (4) from his/her own terminal equipment (DTE), from the Internet or from a separate information system.

## Patentansprüche

1. System zum Implementieren eines Beantwortungsdienstes in einem Telekommunikationsnetzwerk (1), welches aufweist: ein Kurznachrichten-Service-Zentrum (SMSC) zum Empfangen, Speichern und Senden einer Kurznachricht, eine Service-Basis (6) für elektronisches Mail zum Empfangen, Speichern und Senden einer elektronischen Mail-Nachricht, eine Funkvermittlungsstelle (MSC) und eine Datenendgeräteeinrichtung (DTE), **dadurch gekennzeichnet, dass** das System aufweist: einen Beantwortungsserver (2), welcher eine Vorrichtung (8) aufweist, um eine Antwort von jenen Feldern in der Kalenderdatenbank (3) zu erzeugen, welche ein angerufener Teilnehmer für eine fragliche Stationskennung eines anrufenden Teilnehmers gesetzt hat, und Übertragen einer automatischen Kurzmitteilungs- oder elektronischen Mail-Antwort von der Kalenderdatenbank (3) des angerufenen Teilnehmers an den anrufenden Teilnehmer, falls der anrufende Teilnehmer den angerufenen Teilnehmer über einen Telefonanruf oder eine elektronische Mail-Nachricht nicht erreichen kann; und dass die Kalenderdatenbank (3) eine Vorrichtung (9) zum Aktualisieren der Felder in der Kalenderdatenbank (3) aus einem elektronischen Kalender (4) aufweist, welcher von dem angerufenen Teilnehmer genutzt wird.

2. System nach Anspruch 1, **dadurch gekennzeichnet, dass** die Kalenderdatenbank (3) Kalenderinformation enthält, welche sich auf den angerufenen Teilnehmer bezieht, welche in unterschiedlichen Feldern gespeichert ist und aufgrund des Inhalts sortiert ist.

3. System nach Anspruch 1 oder 2, **dadurch gekennzeichnet, dass** der Beantwortungsserver (2) eine Vorrichtung (10) zum Identifizieren des anrufenden Teilnehmers aufgrund der Telefonnummer und/oder der elektronischen Mail-Adresse aufweist.

4. System nach einem der Ansprüche 1 bis 3, **dadurch gekennzeichnet, dass** eine Verbindung von dem Beantwortungsserver (2) zu einer Benutzerdatenbank (5) bereit gestellt ist, um den angerufenen Teilnehmer zu identifizieren und um es zu gestatten, dass eine korrekte Antwortinformation gefunden wird.

5. System nach einem der Ansprüche 1 bis 4, **dadurch gekennzeichnet, dass** der Beantwortungsserver (2) eine Vorrichtung (12) aufweist, um den Anruf zu einem Telefon-Rückantwortdienst zu verbinden, falls der angerufene Teilnehmer diesen Dienst für die fragliche Stationskennung des anrufenden Teilnehmers aktiviert hat.

6. System nach einem der Ansprüche 1 bis 5, **dadurch gekennzeichnet, dass** das System eine Vorrichtung (13) aufweist, um die Information in dem elektronischen Kalender (4) des angerufenen Teilnehmers von der eigenen Datenendgeräteeinrichtung (DTE) des Teilnehmers aus über das Internet oder über ein getrenntes Informationssystem zu pflegen und zu verändern.

7. Verfahren zum Implementieren eines Beantwortungsdienstes in einem Telekommunikationsnetzwerk (1), welches aufweist:
ein Kurzmitteilungs-Service-Zentrum (SMSC) zum Empfangen, Speichern und Senden einer Kurznachricht, eine elektronische Mail-Service-Basis (6) zum Empfangen, Speichern und Senden einer elektronischen Mail-Nachricht, ein Funkvermittlungszentrum (MSC) und eine Datenendgeräteeinrichtung (DTE), **dadurch gekennzeichnet, dass** ein Beantwortungsserver (2) automatisch eine Antwort für einen anrufenden Teilnehmer von jenen Feldern in der Kalenderdatenbank (3) erzeugt, welche ein angerufener Teilnehmer für die fragliche Stationskennung des anrufenden Teilnehmers eingestellt hat, und zum Übertragen einer automatischen Kurzmitteilungs- oder elektronischen Mail-Antwort von der Kalenderdatenbank (3) des angerufenen Teilnehmers zu dem anrufenden Teilnehmer, falls der angerufene Teilnehmer nicht über einen Telefonanruf oder eine elektronische Mail-Nachricht erreicht werden kann; und die Kalenderdatenbank (3) von dem elektronischen Kalender (4) des angerufenen Teilnehmers aktualisiert wird.

8. Verfahren nach Anspruch 7, **dadurch gekennzeichnet, dass** die Kalenderinformation, welche sich auf den angerufenen Teilnehmer bezieht, in unterschiedlichen Feldern der Kalenderdatenbank (3) gespeichert wird, welche aufgrund des Inhalts sortiert ist.

9. Verfahren nach Anspruch 7 oder 8, **dadurch gekennzeichnet, dass** der Beantwortungsserver (2) den anrufenden Teilnehmer aufgrund der Telefonnummer und/oder der elektronischen Mail-Adresse identifiziert.

10. Verfahren nach einem der Ansprüche 7 bis 9, **dadurch gekennzeichnet, dass** der Beantwortungsserver (2) den angerufenen Teilnehmer aus einer Benutzerdatenbank (5) identifiziert, um die richtige Kalenderdatenbank (3) zu finden.

11. Verfahren nach einem der Ansprüche 7 bis 10, **dadurch gekennzeichnet, dass** der Beantwortungsserver (2) einen Telefon-Rückantwortdienst aktiviert, falls jemand versucht, den angerufenen Teilnehmer über das Telefon zu erreichen und diese Funktion auf einen aktiven Zustand für die fragliche Stationskennung des anrufenden Teilnehmers eingestellt wurde.

12. Verfahren nach einem der Ansprüche 7 bis 11, **dadurch gekennzeichnet, dass** der angerufene Teilnehmer seinen/ihren elektronischen Kalender (4) von seiner/ihrer eigenen Endgeräteeinrichtung (DTE) vom Internet oder einem getrennten Informationssystem aus nutzen kann.

## Revendications

1. Système destiné à mettre en oeuvre un service de réponse dans un réseau de télécommunication (1) comprenant un centre de service de messages courts (SMSC) pour recevoir, stocker et envoyer un message court, une base de service de courrier électronique (6) pour recevoir, stocker et envoyer un courrier électronique, un commutateur du service mobile (MSC) et un équipement terminal de traitement de données (DTE), **caractérisé en ce que** le système comprend un serveur de réponse (2) qui comprend des moyens (8) destinés à générer une réponse à partir de ces champs dans la base de données agenda (3) qu'un abonné appelé a établie pour un identifiant d'appelant en question et destinés à transmettre un message court automatique ou une réponse de courrier électronique à partir de la base de données agenda de l'abonné appelé (3) jusqu'à l'appelant si l'appelant ne peut pas joindre l'abonné appelé via un appel téléphonique ou un courriel ; et la base de données agenda (3) comprend des moyens (9) destinés à mettre à jour lesdits champs dans la base de données agenda (3) à partir d'un agenda électronique (4) utilisé par l'abonné appelé.

2. Système selon la revendication 1, **caractérisé en ce que** la base de données agenda (3) contient des informations d'agenda relatives à l'abonné appelé, stockées dans des champs différents et triées par contenu.

3. Système selon la revendication 1 ou 2, **caractérisé en ce que** le serveur de réponse (2) comprend des moyens (10) destinés à identifier l'appelant sur la base du numéro de téléphone et/ou l'adresse de courrier électronique.

4. Système selon l'une quelconque des revendications 1 à 3, **caractérisé en ce qu'**une connexion est prévue à partir du serveur de réponse (2) jusqu'à une base de données utilisateur (5) pour une identification de l'abonné appelé et pour permettre de trouver des informations de réponse correctes.

5. Système selon l'une quelconque des revendications 1 à 4, **caractérisé en ce que** le serveur de réponse (2) comprend des moyens (12) destinés à connecter l'appel à un service de réponse téléphonique si l'abonné appelé a activé ce service pour l'identifiant de l'appelant en question.

6. Système selon l'une quelconque des revendications 1 à 5, **caractérisé en ce** le système comprend des moyens (13) destinés à maintenir et à changer les informations dans l'agenda électronique de l'abonné appelé (4) à partir du propre équipement terminal de traitement de données (DTE) de l'abonné, via Internet ou via un système séparé d'informations.

7. Procédure de mise en oeuvre d'un service de réponse dans un réseau de télécommunication (1) comprenant un centre de service de messages courts (SMSC) pour recevoir, stocker et envoyer un message court, une base de service de courrier électronique (6) pour recevoir, stocker et envoyer un courriel, un commutateur du service mobile (MSC) et un équipement terminal de traitement de données (DTE), **caractérisée en ce qu'**un serveur de réponse (2) génère automatiquement une réponse pour un appelant à partir de ces champs dans la base de données agenda (3) qu'un abonné appelé a établie pour l'identifiant de l'appelant en question et la transmission d'un message court automatique ou d'une réponse de courrier électronique à partir de la base de données agenda de l'abonné appelé (3) jusqu'à l'appelant si l'abonné appelé ne peut pas être joint via un appel téléphonique ou un courriel ; et la base de données agenda (3) comprend est mise à jour à partir de l'agenda électronique (4) de l'abonné appelé.

8. Procédure selon la revendication 7, **caractérisée en ce que** les informations d'agenda relatives à l'abonné appelé sont stockées dans des champs différents dans la base de données agenda (3), triées par contenu.

9. Procédure selon la revendication 7 ou 8, **caractérisée en ce que** le serveur de réponse (2) identifie l'appelant par le numéro de téléphone et/ou par l'adresse de courrier électronique.

10. Procédure selon l'une quelconque des revendications 7 à 9, **caractérisée en ce que** le serveur de réponse (2) identifie l'abonné appelé à partir d'une base de données utilisateur (5) afin de trouver la base de données agenda correcte (3).

11. Procédure selon l'une quelconque des revendications 7 à 10, **caractérisée en ce que** le serveur de réponse (2) active un service de réponse téléphonique si une personne essaye de joindre l'abonné appelé par téléphone et cette fonction a été fixée à un état actif pour l'identifiant de l'appelant en question.

12. Procédure selon l'une quelconque des revendications 7 à 11, **caractérisée en ce que** l'abonné (e) appelé(e) peut utiliser son agenda électronique (4) à partir de son propre équipement terminal de traitement de données (DTE), à partir d'Internet ou à partir d'un système d'information séparé.
